# EUROPEAN PATENT APPLICATION

(11) **EP 2 590 358 A1**
(43) Date of publication of application: **08.05.2013**
(21) Application number: 11780112.6
(22) Date of filing: 20.04.2011
(51) Int. Cl.: H04L 12/14

(54) **METHOD, DEVICE AND SYSTEM FOR PREPAYMENT CHARGING**

(30) Priority: 29.06.2010 CN 201010219298
(71) Applicant: Huawei Technologies Co., Ltd., Shenzhen, Guangdong 518129 (CN)
(72) Inventor: XU, Changjiu, Shenzhen Guangdong 518129 (CN); WANG, Shijun, Shenzhen Guangdong 518129 (CN); WANG, Shuguang, Shenzhen Guangdong 518129 (CN); BAO, Xiande, Shenzhen Guangdong 518129 (CN)
(74) Representative: Lord, Michael
(86) International application number: PCT/CN2011/073070
(87) International publication number: WO 2011/140891

(57) **Abstract**

Embodiments of the present invention provide a method, an apparatus, and a system for improving a service success ratio. The method includes: receiving a credit control request sent by a service control center, where the credit control request includes a service volume and a user identifier; acquiring a charging policy; converting the service volume into service volumes of more than two segments according to the charging policy; and sending, to an account balance manager, a credit control request that carries the user identifier and the service volumes of the more than two segments. A charging apparatus in the embodiment of the present invention converts a service volume into service volumes of multiple segments according to a charging policy, and sends a service volume of each segment to an ABM, so that the ABM may perform accounting according to the service volume of each segment. The ABM performs fee accounting on service volumes of multiple segments at one time, thereby reducing message interaction between an OCS and the ABM, alleviating a workload of the OCS in multiple times of rating, and improving charging efficiency.

## Description

This application claims priority to Chinese Patent Application No. 201010219298.7, filed with the Chinese Patent Office on June 29, 2010, and entitled "METHOD, APPARATUS, AND SYSTEM FOR PREPAID CHARGING", which is incorporated herein by reference in its entirety.

### FIELD OF THE INVENTION

The present invention relates to the field of communication technologies, and in particular to a method, an apparatus, and a system for prepaid charging.

### BACKGROUND OF THE INVENTION

In OCS (Online charging system, online charging system) architecture in 3GPP (Third Generation Partnership Project, third generation partnership project), an ABM (Account Balance Management, account balance manager) function is specified. An ABM serves as an independent module, and an Rc interface is adopted with a rating engine. However, only that the Rc adopts DCC (Diameter Credit-Control Application, diameter credit-control application protocol) is defined, but a specific interface is not clarified.

In a case of clear responsibility division where the OCS is responsible for rating and the ABM is responsible for balance management, when reservation and fee deduction of free resources are involved, for example, when free resources exist or charging by count exists during a charging process, in the prior art, the ABM may only return a partial authorized amount at one time, but the OCS may perform rating for multiple times. The OCS and ABM interact with each other for multiple times, affecting the efficiency and timeliness of prepaid charging.

### SUMMARY OF THE INVENTION

Embodiments of the present invention provide a method, an apparatus, and a system for prepaid charging, which are used to solve a technical problem in the prior art that an ABM and an OCS interact with each other too many times in prepaid charging so as to affect the efficiency of the prepaid charging.

An embodiment of the present invention provides a method for prepaid charging, including:
receiving a credit control request sent by a service control center, where the credit control request includes a service volume and a user identifier;
acquiring a charging policy;
converting the service volume into service volumes of more than two segments according to the charging policy; and
sending, to an account balance manager, a credit control request that carries the user identifier and the service volumes of the more than two segments.

An embodiment of the present invention provides a method for prepaid charging, including:
receiving a credit control request sent by a charging apparatus, where the credit control request includes a user identifier and service volumes of more than two segments;
according to the user identifier, acquiring a user account book corresponding to the user identifier;
separately performing fee accounting on a service volume of each segment according to the user account book and the service volumes of the more than two segments; and
sending a credit control answer to the charging apparatus, where the credit control answer includes a service volume that has undergone accounting.

An embodiment of the present invention provides a charging apparatus, including:
a first receiving unit, configured to receive a credit control request sent by a service control center, where the credit control request includes a service volume and a user identifier;
a charging policy acquiring unit, configured to acquire a charging policy;
a converting unit, configured to convert the service volume into service volumes of more than two segments according to the charging policy; and
a credit control request sending unit, configured to send, to an account balance manager, a credit control request that carries the user identifier and the service volumes of the more than one segment.

An embodiment of the present invention provides an account balance manager, including:
a second receiving unit, configured to receive a credit control request sent by a charging apparatus, where the credit control request includes a user identifier and service volumes of more than one segment;
a user account book acquiring unit, configured to acquire, according to the user identifier, a user account book corresponding to the user identifier;
an accounting unit, configured to separately perform fee accounting on a service volume of each segment according to the user account book and the service volumes of the more than two segments; and
a credit control answer sending unit, configured to send a credit control answer to the charging apparatus, where the credit control answer includes a service volume that has undergone accounting.

An embodiment of the present invention provides a system for prepaid charging, including:
a charging apparatus, configured to: receive a credit control request sent by a service control center, where the credit control request includes a service volume and a user identifier; acquire a corresponding charging policy according to the user identifier; convert the service volume into service volumes of more than two segments according to the charging policy; and send, to an account balance manager, a credit control request that carries the user identifier and the service volumes of the more than two segments; and
the account balance manager, configured to: receive the credit control request sent by the charging apparatus, where the credit control request includes the user identifier and the service volumes of the more than two segments; acquire, according to the user identifier, a user account book corresponding to the user identifier; separately perform fee accounting on a service volume of each segment according to the user account book and the service volumes of the more than two segments; and send a credit control answer to the charging apparatus, where the credit control answer includes a service volume that has undergone accounting.

The charging apparatus in the embodiment of the present invention converts a service volume into service volumes of multiple segments according to a charging policy, and sends the service volume of each segment to the ABM so that the ABM may perform fee accounting according to the service volume of the segment. The ABM performs fee accounting on service volumes of multiple segments at one time, thereby reducing message interaction between the OCS and the ABM, alleviating a workload of the OCS in multiple times of rating, and improving charging efficiency.

### BRIEF DESCRIPTION OF THE DRAWINGS

To illustrate technical solutions in embodiments of the present invention more clearly, accompanying drawings to be used in the description of the embodiments are briefly introduced below. Apparently, the accompanying drawings in the following description show only some embodiments of the present invention, and a person skilled in the art may derive other accompanying drawings from these accompanying drawings without creative efforts.

FIG. 1 is a flow chart of a method for prepaid charging according to an embodiment of the present invention;

FIG. 2 is a flow chart of another method for prepaid charging according to an embodiment of the present invention;

FIG. 3 is a flow chart of a method for prepaid charging with free resources according to an embodiment of the present invention;

FIG. 4 is a flow chart of a method for prepaid charging in which free resources take effect at a specific time point according to an embodiment of the present invention;

FIG. 5 is a flow chart of a method for prepaid charging with charging by count according to an embodiment of the present invention;

FIG. 6 is a flow chart of a method for prepaid charging in which a balance is insufficient according to an embodiment of the present invention;

FIG. 7 is a schematic structural diagram of a charging apparatus according to an embodiment of the present invention;

FIG. 8 is a schematic structural diagram of an account balance manager according to an embodiment of the present invention;

FIG. 9 is a schematic structural diagram of an accounting subunit of an account balance manager according to an embodiment of the present invention; and

FIG. 10 is a schematic structural diagram of a system for prepaid charging according to an embodiment of the present invention.

### DETAILED DESCRIPTION OF THE EMBODIMENTS

The technical solutions in the embodiments of the present invention are further illustrated below with reference to the accompanying drawings in the embodiments of the present invention.

An embodiment of the present invention discloses a method for prepaid charging, including:

S101: A charging apparatus receives a CCR (Credit Control Request, credit control request) sent by a service control center, where the CCR includes a service volume and a user identifier.

When the CCR is used to apply for a reserved resource, the CCR carries an RSU (requested-service-unit, requested-service-unit). The RSU includes a service volume and a user identifier. According to different specific services, the service volume may have multiple forms, for example, call time reserved by application, a traffic volume reserved by application, the total number of bytes reserved by application, the number of input bytes reserved by application, the number of output bytes reserved by application, or another special unit of measurement reserved by application.

When the CCR is used for fee deduction, the CCR carries a USU (used-service-unit, used-service-unit). The USU includes a service volume and a user identifier. According to different specific services, the service volume may have multiple forms, for example, used call time, a used traffic volume, the total number of used bytes, the number of used input bytes, the number of used output bytes, or another used special unit of measurement.

The service control center may be an SCP (service control point, service control point), and may also be another control device.

S102: The charging apparatus acquires a charging policy.

The charging policy may be stored in the charging apparatus, and may also be stored in another storage medium, for example, stored in SDM (Service Data Management, service data management). When receiving the CCR, the charging apparatus needs to perform, according to the user identifier, querying for a charging policy corresponding to the user identifier. There may be multiple types of charging policies, for example, a package to which a charged user belongs, and a linear rate in each time segment.

The charging apparatus may acquire, according to the user identifier, the charging policy corresponding to the user identifier, and may also acquire the charging policy of a user without the need of according to the user identifier. For example, the charging policy of the user may be determined according to a unified charging rule or a user access code, and so on.

S103: The charging apparatus converts the service volume into service volumes of more than one segment according to the charging policy.

During a charging process, multiple rates may exist, for example, a rate for first 3 minutes in a call is RMB 0.5/minute, and a rate after the third minute is RMB 1/minute. Therefore, the charging apparatus converts the service volume in the RSU or USU into service volumes of more than one segment according to multiple linear rates corresponding to the service volume. A service volume of each segment includes a payment service volume of the segment, a payment amount of the segment, and a minimum payment unit of the segment. A ratio of the payment amount of the segment to the payment service volume of the segment can be used to indicate a rate of each segment. For example, if the service volume in the CCR is 8 minutes, the rate of RMB 0.5/minute for the first 3 minutes may be converted into the following: a payment amount of the segment is RMB 1.5, payment time of the segment is 3 minutes, and a minimum payment unit is 1 minute. The rate of RMB 1/minute for the last 5 minutes may be converted into the following: a payment amount of the segment is RMB 5, payment time of the segment is 5 minutes, and a minimum payment unit is 1 minute. The payment service volume of the segment may further include multiple forms, such as payment time of the segment, a payment traffic volume of the segment, the total number of bytes in payment of the segment, the number of input bytes in the payment of the segment, the number of output bytes in the payment of the segment, and a special service unit in the payment of the segment.

S104: The charging apparatus sends, to the ABM, a CCR that carries the user identifier and the service volumes of the more than one segment.

The charging apparatus sends converted service volumes of multiple segments to the account balance manager, so that the account balance manager performs fee accounting. In this case, content of an RSU/USU carried in the CCR is different from content of the RSU/USU in the CCR sent by the SCP to the charging apparatus. In this case, the CCR carries multiple RSUs/USUs. The number of the RSUs/USUs is the same as the number of the segments of the converted service volumes. One RSU/USU includes a service volume of one segment. A structure of the RSU is as follows:
Requested-Service-Unit ::= < AVP Header: 437 >
   [CC-Time]
   [CC-Money]
   [CC-Total-Octets]
   [CC-Input-Octets]
   [CC-Output-Octets]
   [CC-Service-Specific-Units]
   [Min-Charge-Unit]
and a structure of the USU is as follows:
Used-Service-Unit ::= < AVP Header: 446>
   [Reporting-Reason]
   [Rate-Change-Usage]
   [CC-Time]
   [CC-Money]
   [CC-Total-Octets]
   [CC-Input-Octets]
   [CC-Output-Octets]
   [CC-Service-Specif ic-Units]
   [Min-Charge-Unit]

CC-Time indicates the payment time of the segment, CC-Money indicates the payment amount of the segment, Min-Charge-Unit indicates the minimum payment unit of the segment, CC-Total-Octets indicates a total traffic volume in the payment of the segment, CC-Input-Octets indicates a total received traffic volume in the payment of the segment, CC-Output-Octets indicates a total sent traffic volume in the payment of the segment, CC-Service-Specific-Units indicates the special service unit in the payment of the segment, Reporting-Reason indicates a reporting reason, and Tariff-Change-Usage indicates a fee payment purpose. Min-Charge-Unit may be used in charging by count, and may also be used to judge a minimum traffic volume at the time when a balance is insufficient. In the RSU and USU, among the foregoing fields, CC-Money and Min-Charge-Unit are mandatory, and other fields are optional.

The charging apparatus in the embodiment of the present invention converts a service volume into service volumes of multiple segments according to a charging policy, and sends the service volume of each segment to the ABM so that the ABM may perform fee accounting according to the service volume of each segment. The OCS sends, at one time, a CCR that includes service volumes of multiple segments, thereby reducing the message interaction between the OCS and the ABM, alleviating a workload of the OCS in multiple times of rating, and improving the charging efficiency.

An embodiment of the present invention discloses another method for prepaid charging, including:

S201: An ABM receives a CCR sent by a charging apparatus, where the CCR includes a user identifier and service volumes of more than one segment.

Content included in the CCR here is the same as the content included in the CCR in S104.

S202: The ABM acquires, according to the user identifier, a user account book corresponding to the user identifier.

S203: Separately perform fee accounting on a service volume of each segment according to the user account book and the service volumes of the more than one segment.

If the CCR carries an RSU, that is, the service volume is a service volume reserved by application, the ABM separately reserves a fee for a service volume of each segment reserved by application, according to the user account book and service volumes of more than one segment reserved by application.

If the CCR carries a USU, that is, the service volume is a used service volume, the ABM separately perform fee deduction on a used service volume of each segment according to used service volumes of more than one segment.

During fee accounting for a service volume of a segment, a rate corresponding to the service volume of each segment is separately calculated according to a payment service volume of the segment and a payment amount of the segment. Then fee accounting is performed on the service volume of each segment according to the user account book, the rate corresponding to the service volume of each segment, and the payment service volume of the segment.

Sometimes, the user account book may have a residual free resource. The free resource has no specific time limitation. In this case, accounting is first performed on a service volume corresponding to the residual free resource, and then fee accounting is separately performed on the service volume of each segment according to the service volume that has undergone accounting, the rate corresponding to the service volume of each segment, and the payment service volume of the segment. If the free resource has a time limitation, the residual free resource is used to perform fee accounting on the service volume of the segment only in a case that a time condition is met.

If charging by count occurs during a charging process, for example, a required payment amount for first 3 minutes of a call is RMB 1.5, and RMB 1.5 still needs to be paid even if call time is less than 3 minutes, the ABM needs to judge whether a minimum payment unit of a segment is larger than a payment service volume of the segment. If larger, the ABM performs fee accounting on a service volume of this segment according to a payment amount of the segment in the minimum payment unit. If less, the ABM performs fee accounting on the service volume of this segment according to the payment service volume of the segment. If a free resource exists in the user account book in this case, and the free resource is larger than the minimum payment unit, fee accounting is performed on the service volume of this segment according to the free resource. If the free resource is less than the minimum payment unit, fee accounting is first performed on the service volume of the segment according to the payment amount of the segment, and then accounting is performed on a fee of a service volume of a next segment by using the free resource.

If a balance in the user account book is less than the minimum payment unit of the segment, that is, the balance fails to pay the minimum unit of the segment, a fee obtained through this accounting is 0 for the service volume of the segment.

S204: The ABM sends a credit control answer to the charging apparatus, where the credit control answer includes a service volume that has undergone accounting.

The service volume that has undergone accounting may be indicated by using a GSU (Granted-Service-Unit, granted-service-unit).

The foregoing charging may have multiple objects, such as voice call time, video call time and traffic volume, and Internet access traffic volume. This embodiment does not limit the objects of charging.

In the embodiment of the present invention, the ABM can perform fee accounting on service volumes of multiple segments, thereby reducing message interaction between the OCS and the ABM, alleviating a workload of the OCS in multiple times of ratings, and improving charging efficiency.

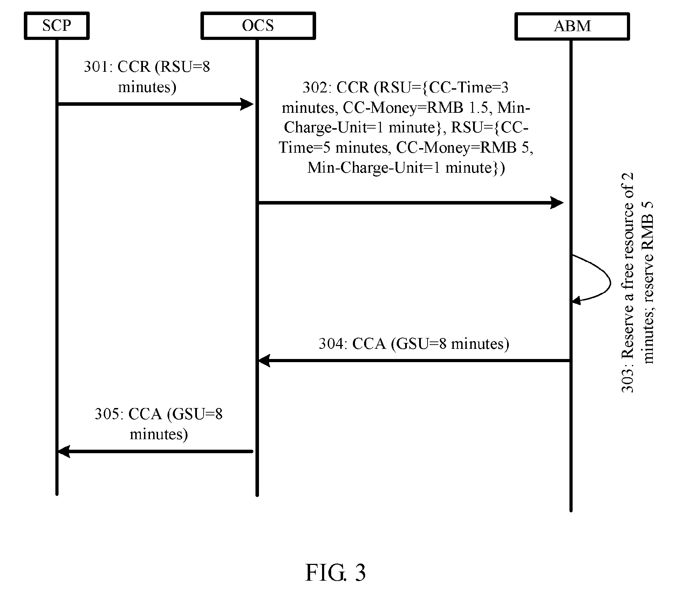

Usually, a rate changes according to call duration. For example, in an application scenario as shown in FIG. 3, a rate for the first minute to the third minute in call time is RMB 0.5/minute, and a rate for the fourth minute to the tenth minute in the call time is RMB 1/minute. Residual free call duration on a user account book in an ABM is 2 minutes in this case. A balance in the user account book is RMB 6. In this case, call duration applied for by an SCP is 8 minutes. A specific process for implementing precise fee reservation is shown as follows:

S301: The SCP sends a CCR to an OCS to apply for reserved call duration. The CCR includes an RSU and a user identifier of a charged user. As the duration reserved by application is 8 minutes, CC_Time in the RSU carried in the CCR is equal to 8 minutes. The user identifier may be a mobile phone number, or a short number, and other identification information that is capable of uniquely identifying the charged user.

S302: The OCS receives the CCR, parses the CCR, and performs rating processing on this charging application.

CC_Time in an RSU acquired by parsing the CCR is equal to 8 minutes, and a charging policy corresponding to the user identifier is found according to the user identifier of the charged user. It is determined that two different rates exist in the 8 minutes of call that is applied for by the user. In this case, rating processing is performed according to the reserved duration of 8 minutes. The OCS converts two segments of different rates into two segments of RSUs. In the first RSU, CC_Time is equal to 3 minutes, CC_money is equal to RMB 1.5, Min_charge_unit is equal to 1 minute. In the second RSU, CC_time is equal to 5 minutes, CC_money is equal to RMB 5, Min_charge_unit is equal to 1 minute. A CCR that includes the two RSUs is sent to the ABM. A rate in an account may be determined by using a ratio of CC_money to CC_time. Min_charge_unit indicates, in a case of such rate, a minimum charging service volume or minimum service volume at the time when the balance is insufficient.

S303: After receiving the CCR that includes the two RSUs, the ABM reserves a call fee.

After parsing the CCR, the ABM acquires the two RSUs and the user identifier of the charged user, acquires the user account book according to the user identifier, and determines that a user account has 2-minute free call time left. Therefore, the ABM first reserves the 2-minute free call time. CC_time included in a first RSU is equal to 3 minutes, and 2 minutes are already reserved. Therefore, only 1 minute can be reserved in a case of the first rate, and the first rate is calculated according to CC_money and CC_time as follows: CC_money/CC_time = RMB 1.5/3 minutes = RMB 0.5/minute. Then an amount reserved for in the case of the first rate is as follows: 1 minute x RMB 0.5/minute = RMB 0.5. Finally, as 2-minute free call time and 1-minute charged call time in the case of the first rate have been reserved, 5 minutes are reserved for a case of the second rate, and the second rate is calculated according to CC_money and CC_time as follows: CC_money/CC_time = RMB 5/5 minutes = RMB 1/minute. Then an amount reserved in the case of the second rate is as follows: 5 minutes x RMB 1/minute = RMB 5. Therefore, a total call fee reserved this time is as follows: RMB 0.5 + RMB 5 = RMB 5.5. In addition, as RMB 5.5 is less than the balance of RMB 6 in the account, reservation succeeds this time.

S304: After successfully reserving the call fee, the ABM returns a CCA (Credit Control Answer, credit control answer) to the OCS. The CCA includes the reserved call duration of 8 minutes, that is, a GSU in the CCA is equal to 8 minutes.

S305: The OCS sends the received CCA to the SCP, so that the SCP may monitor call time according to the reserved call duration of 8 minutes in the CCA.

If the CCR sent by the SCP in S301 carries a USU, that is, the SCP applies for actual fee deduction, a fee deduction flow is the same as the flow from S301 to S305, and is not described herein again.

As the OCS will use RSUs of segments to indicate multiple rates, and an RSU includes a payment service volume of a segment, a payment amount of the segment, and a minimum payment unit of the segment, the ABM may calculate a corresponding rate according to the payment service volume of the segment and the payment amount of the segment. Therefore, the ABM may implement reservation once, and may implement reservation of a preferential fee, thereby reducing message interaction between the OCS and the ABM, alleviating a workload of the OCS in multiple times of rating, improving charging efficiency, and implementing precise fee reservation.

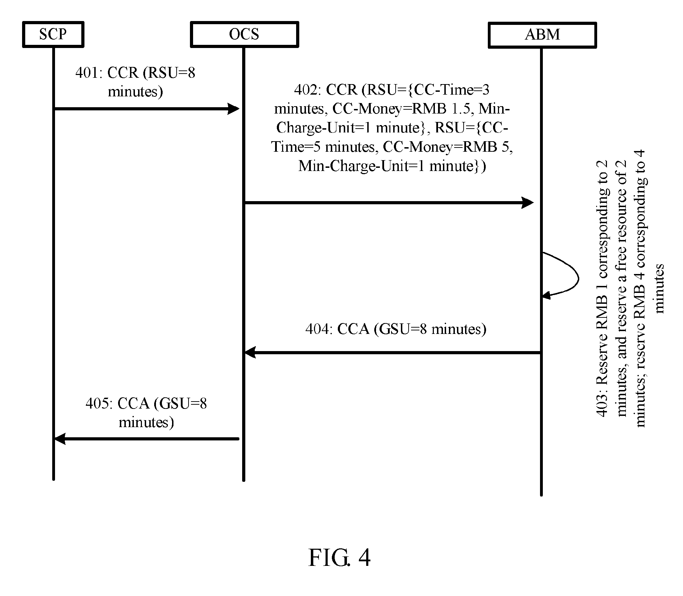

Usually, a rate changes according to call duration. Preferential fee time is a special time segment. For example, in an application scenario as shown in FIG. 4, a rate for the first minute to the third minute in call time is RMB 0.5/minute, and a rate for the fourth minute to the tenth minute in the call time is RMB 1/minute. A balance in a user account book is RMB 6 in this case. Residual free call duration in the user account book is 2 minutes. The free call time comes into effect from 8:00 to 9:00 every day. In this case, call duration applied for by an SCP is 8 minutes, and a call time point applied for is 7:58. In this case, a specific process for implementing precise fee reservation is shown as follows:

S401 to S402: The same as S301 and S302, and details are not described herein again.

S403: After receiving a CCR that includes two RSUs, an ABM reserves a call fee.

After parsing the CCR, the ABM acquires the two RSUs and a user identifier of a charged user. CC_time in a first RSU is 3 minutes. From a user account book acquired according to the user identifier, it may be known that there is 2-minute free call time starting from 8:00. The call time point applied for starts at 7:58. Therefore, a call fee of 2 minutes in the first rate is first reserved. The first rate is calculated according to CC_money and CC_time as follows: CC_money/CC_time = RMB 1.5/3 minutes = RMB 0.5/minute. Then a fee reserved in a case of the first rate is as follows: 2 minutes x RMB 0.5/minute = RMB 1. Then a free call resource of 2 minutes is reserved. Finally, in the case of the first rate, 2 minutes have been reserved, and a free resource of 2 minutes is reserved, and therefore, reservation needs to be performed in a case of the second rate, and reserved time is 4 minutes. The second rate is calculated according to CC_money and CC_time as follows: CC_money/CC_time = RMB 5/5 minutes = RMB 1/minute. Then an amount reserved in the case of the second rate is as follows: 4 minutes x RMB 1/minute = RMB 4. Therefore, a total call fee reserved this time is as follows: RMB 1 + RMB 4 = RMB 5. In addition, as RMB 5 is less than the balance of RMB 6 in an account, reservation succeeds this time.

S404: After successfully reserving the call fee, the ABM returns a CCA to an OCS. The CCA includes reserved call duration of 8 minutes, that is, a GSU in the CCA is equal to 8 minutes.

S405: The OCS sends the received CCA to the SCP, so that the SCP may monitor call time according to the reserved call duration of 8 minutes in the CCA.

If a CCR sent by the SCP in 401 carries a USU, that is, the SCP applies for actual fee deduction, a fee deduction flow is the same as the flow from S401 to S405, and is not described herein again.

As the OCS will use RSUs of segments to indicate multiple rates, and an RSU includes a payment service volume of a segment, a payment amount of the segment, and a minimum payment unit of the segment, the ABM may calculate a corresponding rate according to the payment service volume of the segment and the payment amount of the segment. Therefore, the ABM may implement reservation once, and may implement reservation of preferential fees at a specific time point, thereby reducing message interaction between the OCS and the ABM, alleviating a workload of the OCS in multiple times of rating, improving charging efficiency, and implementing the precise fee reservation.

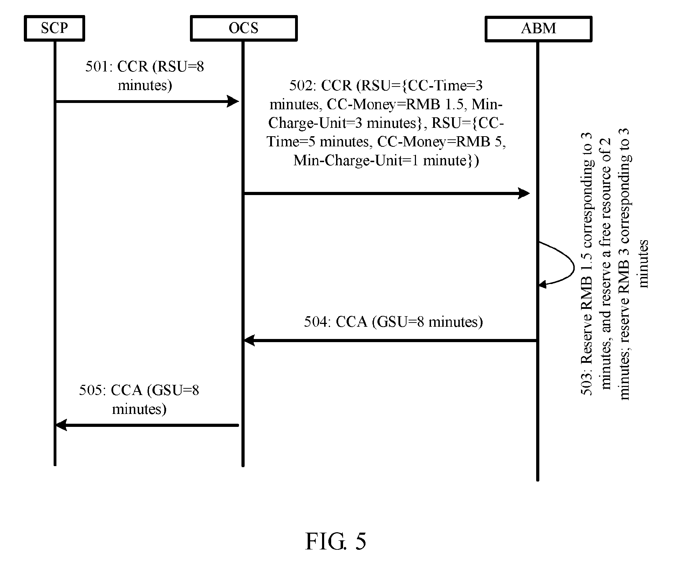

In actual applications, a free resource may be charged by count. For example, in an application scenario as shown in FIG. 5, a fee for the first minute to the third minute in call time is RMB 1.5, and in a case of less than 3 minutes, fee deduction is performed according to the fee for 3 minutes. A rate for the fourth minute to the tenth minute in the call time is RMB 1/minute. A balance in a user account book is RMB 6 in this case. Residual free call duration in the user account book is 2 minutes. The first 2 minutes cannot be reserved by using the free call time (if the residual free call duration in the user account book now is 4 minutes, the first 3 minutes may be reserved by using the free call time). In this case, call duration applied for by an SCP is 8 minutes. In this case, a specific process for implementing precise fee reservation is as follows: □

S501 to S502: The same as S301 and S302, and details are not described herein again.

S503: After receiving a CCR that includes two RSUs, an ABM reserves a call fee.

After parsing the CCR, the ABM acquires the two RSUs and a user identifier of a charged user. CC_time in a first RSU is 3 minutes, and Min_charge_unit is 3 minutes. Therefore, a reserved fee in a case of a first rate is the value of CC_money, that is, RMB 1.5. Then a free call resource of 2 minutes is reserved. Finally, in the case of the first rate, 3 minutes have been reserved, and a free resource of 2 minutes is reserved, and therefore, reservation needs to be performed in a case of a second rate, and reserved time is 3 minutes. The second rate is calculated according to CC_money and CC_time as follows: CC_money/CC_time = RMB 5/5 minutes = RMB 1/minute. Then the amount reserved for the case of the second rate is as follows: 3 minutes x RMB 1/minute = RMB 3. Therefore, a total call fee reserved this time is as follows: RMB 1.5 + RMB 3 = RMB 4.5. In addition, as RMB 4.5 is less than the balance RMB 6 of the account, reservation succeeds this time.

S504: After successfully reserving the call fee, the ABM returns a CCA to an OCS. The CCA includes reserved call duration of 8 minutes, that is, a GSU in the CCA is equal to 8 minutes.

S505: The OCS sends the received CCA to the SCP, so that the SCP may monitor call time according to the reserved call duration of 8 minutes in the CCA.

If a CCR sent by the SCP in S501 carries a USU, that is, the SCP applies for actual fee deduction, a fee deduction flow is the same as the flow from S501 to S505, and is not described herein again.

As the OCS will use RSUs of segments to indicate multiple rates, and an RSU includes a payment service volume of a segment, a payment amount of the segment, and a minimum payment unit of the segment, the ABM may calculate a corresponding rate according to the payment service volume of the segment and the payment amount of the segment, and may effectively complete charging by count by using the minimum payment unit, thereby reducing message interaction between the OCS and the ABM, and implementing the precise fee reservation.

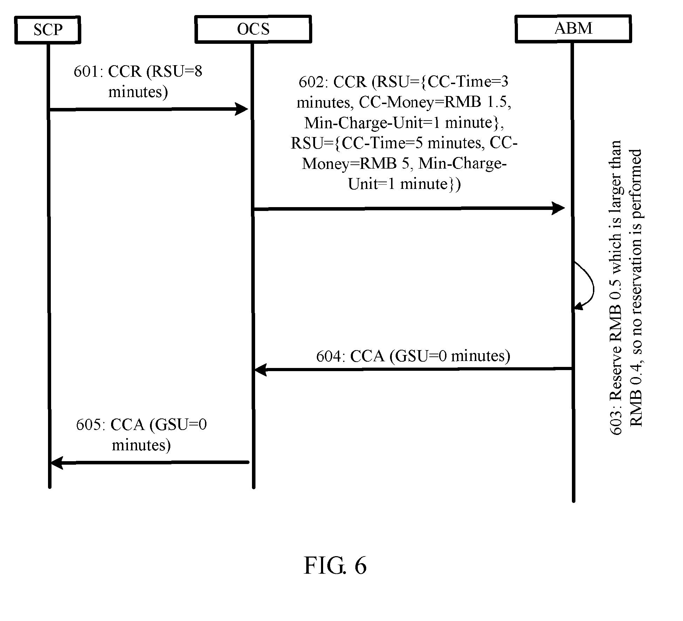

In actual applications, a case where a balance cannot cover minimum call time may exist. For example, in an application scenario as shown in FIG. 6, a rate for the first minute to the third minute of call time is RMB 0.5/minute, a rate for the fourth minute to the tenth minute of the call time is RMB 1/minute, and a balance in a user account book is RMB 0.4 in this case. In this case, call duration applied for by an SCP is 8 minutes. In this case, a specific process for implementing precise fee reservation is as follows: □

S601 to S602: The same as S301 and S302, and details are not described herein again.

S603: After receiving a CCR that includes two RSUs, an ABM reserves a call fee.

After parsing the CCR, the ABM acquires the two RSUs and a user identifier of a charged user. The first rate is calculated according to CC_money and CC_time as follows: CC_money/CC_time = RMB 1.5/3 minutes = RMB 0.5/minute. Min_charge_unit is 1 minute. That is, a minimum amount that can be reserved in this case is 1 minute x RMB 0.5/minute = RMB 0.5. However, the balance on the user account book is only RMB 0.4, which is less than the required minimum amount for reservation. Therefore, reservation cannot be performed this time.

S604: After successfully reserving the call fee, the ABM returns a CCA to an OCS. The CCA includes reserved call duration of 0 minute, that is, a GSU in the CCA is equal to 0 minute.

S605: The OCS sends the received CCA to the SCP.

If a CCR sent by the SCP in S601 carries a USU, that is, the SCP applies for actual fee deduction, a fee deduction flow is the same as the flow from S601 to S605, and is not described herein again.

As the OCS will use RSUs of segments to indicate multiple rates, and an RSU includes a payment service volume of a segment, a payment amount of the segment, and a minimum payment unit of the segment, the ABM may calculate a corresponding rate by using the payment service volume of the segment and the payment amount of the segment, and determine, according to the rate and minimum payment unit, a minimum amount required for this payment. When determining that the minimum amount required by this payment is more than the balance in a user account, the ABM will not reserve a fee for this charging, and therefore, the OCS does not need to release this reservation for fee deduction, thereby reducing message interaction between the OCS and the ABM, alleviating rerating work of the OCS, and implementing the precise fee reservation.

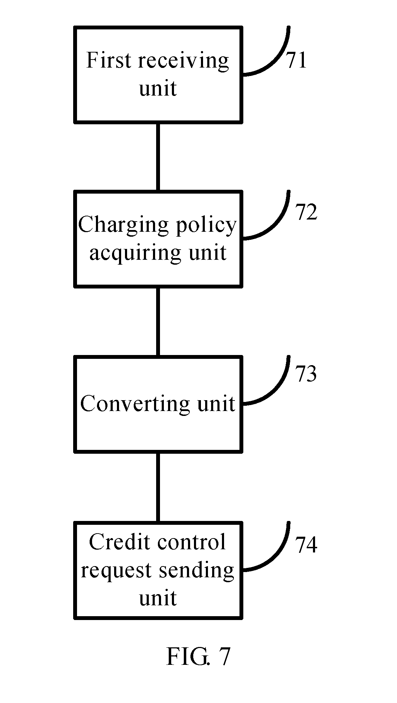

As shown in FIG. 7, an embodiment of the present invention further provides a charging apparatus, including:

A first receiving unit 71 is configured to receive a credit control request sent by a service control center, where the credit control request includes a service volume and a user identifier.

When the CCR is used to apply for a reserved resource, the CCR carries an RSU (requested-service-unit, requested-service-unit). The RSU includes a service volume and a user identifier. According to the different specific services, the service volume may have multiple forms, for example, call time reserved by application, a traffic volume reserved by application, the total number of bytes reserved by application, the number of input bytes reserved by application, the number of output bytes reserved by application, or another special unit of measurement reserved by application.

When the CCR is used for fee deduction, the CCR carries a USU (used-service-unit, used-service-unit). The USU includes a service volume and a user identifier. According to the different specific services, the service volume may have multiple forms, for example, used call time, a used traffic volume, the total number of used bytes, the number of used input bytes, the number of used output bytes, or another used special unit of measurement.

A charging policy acquiring unit 72 is configured to acquire a charging policy.

The charging policy may be stored in the charging apparatus, and may also be stored in another storage medium, for example, stored in SDM. When the first receiving unit 71 receives the CCR, the charging policy acquiring unit 72 needs to perform querying, according to the user identifier, for a charging policy corresponding to the user identifier. There may be multiple types of charging policies, for example, a package to which a charged user belongs, and a linear rate in each time segment.

A converting unit 73 is configured to convert the service volume into service volumes of more than two segments according to the charging policy.

During a charging process, multiple rates may exist, for example, a rate for first 3 minutes in a call is RMB 0.5/minute, and a rate after the third minute is RMB 1/minute. Therefore, the converting unit 73 converts the service volume in the RSU or USU into service volumes of more than one segment according to multiple linear rates corresponding to the service volume. A service volume of each segment includes a payment service volume of the segment, a payment amount of the segment, and a minimum payment unit of the segment. A ratio of the payment amount of the segment to the payment service volume of the segment can be used to indicate a rate of each segment. For example, if the service volume in the CCR is 8 minutes, the rate of RMB 0.5/minute for the first 3 minutes may be converted into the following: a payment amount of the segment is RMB 1.5, payment time of the segment is 3 minutes, and a minimum payment unit is 1 minute. The converting unit 73 converts the rate of RMB 1/minute for the last 5 minutes into the following: a payment amount of the segment is RMB 5, payment time of the segment is 5 minutes, and a minimum payment unit is 1 minute. The payment service volume of the segment may further include multiple forms, such as payment time of the segment, a payment traffic volume of the segment, the total number of bytes in payment of the segment, the number of input bytes in the payment of the segment, the number of output bytes in the payment of the segment, or a special service unit in the payment of the segment.

A credit control request sending unit 74 is configured to send, to an account balance manager, a credit control request that carries the user identifier and the service volumes of the more than one segment.

The credit control request sending unit 74 sends converted service volumes of multiple segments to the account balance manager, so that the account balance manager performs fee accounting. In this case, content of an RSU/USU carried in the CCR is different from a content of the RSU/USU in the CCR sent by the SCP to the charging apparatus. In this case, the CCR carries multiple RSUs/USUs. The number of the RSUs/USUs is the same as the number of segments of converted service volumes.

The charging apparatus may be an OCS, and may also be another charging device.

For the service volumes of the more than one segment, the user account book, a fee, and an involved specific working process involved in this embodiment, reference may be made to relevant content disclosed in the embodiments involved in FIG. 3 to FIG. 6, and details are not described herein again.

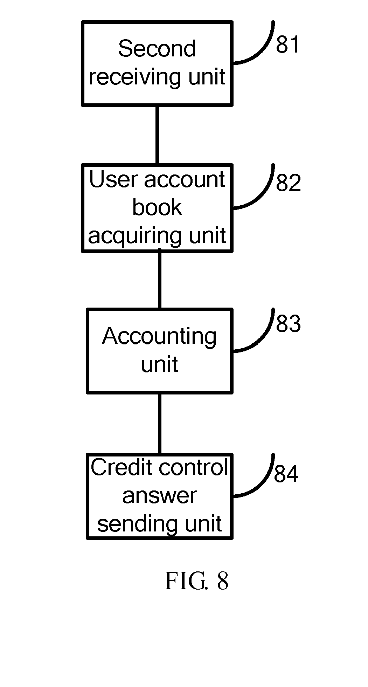

As shown in FIG. 8, an embodiment of the present invention further provides an account balance manager, including:
a second receiving unit 81, configured to receive a CCR sent by a charging apparatus, where the CCR includes a user identifier and service volumes of more than one segment;
a user account book acquiring unit 82, configured to acquire, according to the user identifier, a user account book corresponding to the user identifier;
an accounting unit 83, configured to separately perform fee accounting on a service volume of each segment according to the user account book and the service volumes of the more than one segment; and
a credit control answer sending unit 84, configured to send a credit control answer to the charging apparatus, where the credit control answer includes a service volume that has undergone accounting.

If charging by count occurs during a charging process, the accounting unit 83 is specifically configured to perform fee accounting on a service volume of a segment according to a payment amount of the segment when a minimum payment unit of the segment is larger than a payment service volume of the segment.

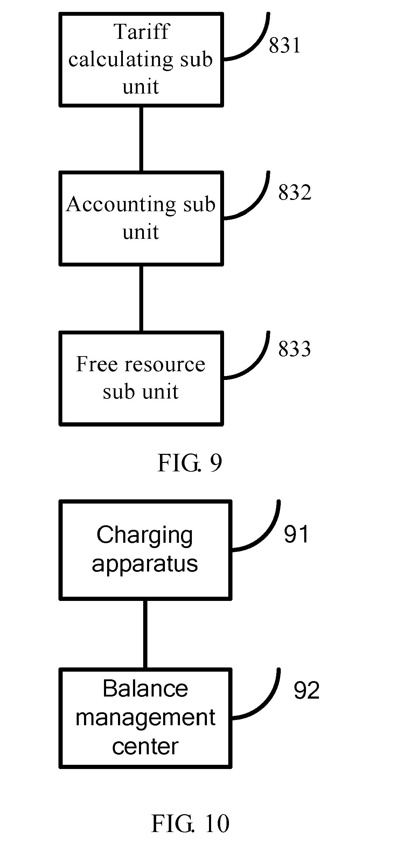

Optionally, as shown in FIG. 9, the accounting unit 83 further includes a rate calculating subunit 831 and an accounting subunit 832. The rate calculating subunit 831 is configured to separately calculate a rate corresponding to the service volume of each segment, according to a payment service volume of the segment and a payment amount of the segment. The accounting subunit 832 is configured to separately perform fee accounting on the service volume of each segment according to the user account book, the rate corresponding to the service volume of each segment, and the payment service volume of the segment.

Sometimes, a residual free resource may exist in the user account book. As shown in FIG. 9, the accounting unit 83 further includes a free resource subunit 833, configured to perform, according to the residual free resource in the user account book, accounting on a service volume corresponding to the residual free resource. The accounting subunit 832 is specifically configured to separately perform fee accounting on the service volume of each segment according to the service volume that has undergone accounting by the free resource subunit 833, the rate corresponding to the service volume of each segment, and the payment service volume of the segment.

If a balance in the user account book is less than the minimum payment unit of the segment, that is, the balance cannot cover the minimum unit of the segment, a fee obtained through this accounting by the accounting unit 83 is 0 for the service volume of this segment.

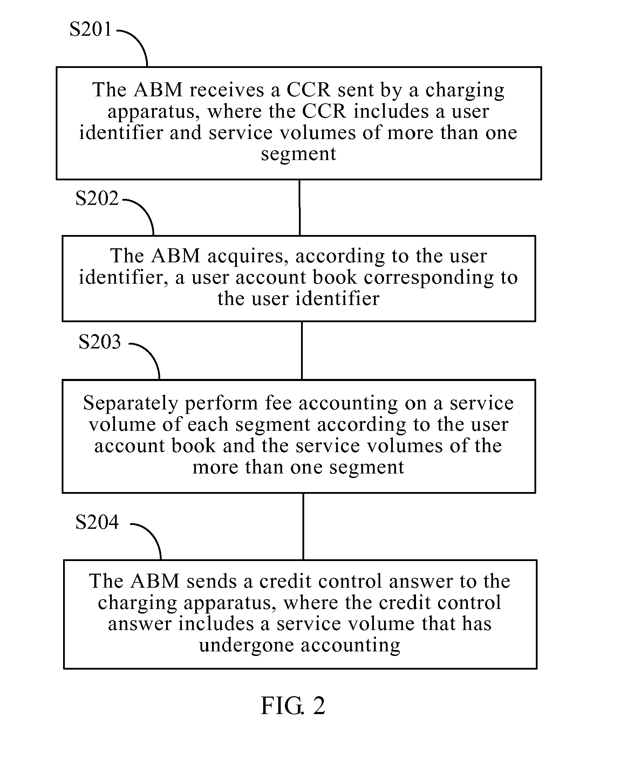

For the service volumes of the more than one segment, the user account book, the fee, and an involved specific working process involved in this embodiment, reference may be made to relevant content disclosed in the embodiments involved in FIG. 2 to FIG. 6, and details are not described herein again.

As shown in FIG. 10, an embodiment of the present invention further provides a system for prepaid charging, including:
a charging apparatus 91, configured to: receive a credit control request sent by a service control center, where the credit control request includes a service volume and a user identifier; acquire a corresponding charging policy according to the user identifier; convert the service volume into service volumes of more than one segment according to the charging policy; and send, to an account balance manager 92, a credit control request that carries the user identifier and the service volumes of the more than one segment; and
the account balance manager 92, configured to: receive the credit control request sent by the charging apparatus, where the credit control request includes the user identifier and the service volumes of the more than one segment; acquire, according to the user identifier, a user account book corresponding to the user identifier; separately perform fee accounting on a service volume of each segment according to the user account book and the service volumes of the more than one segment; and send a credit control answer to the charging apparatus 91, where the credit control answer includes a service volume that has undergone accounting.

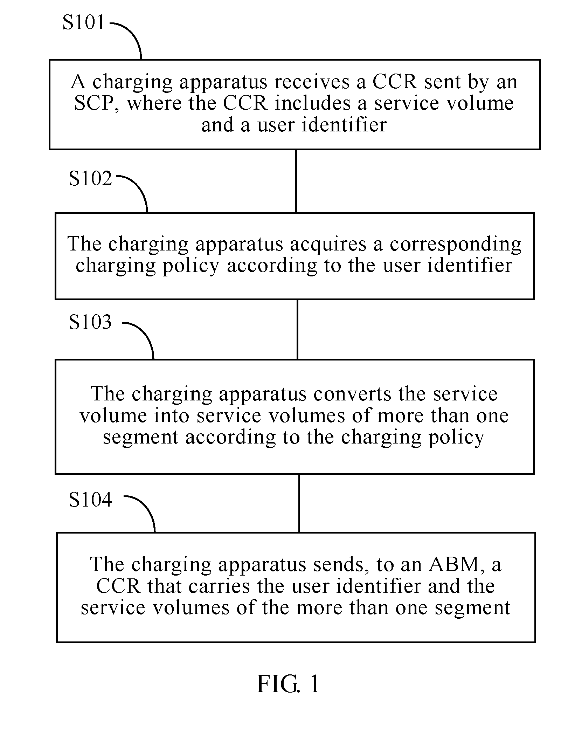

For the service volumes of the more than one segment, the user account book, a fee, and an involved specific working process involved in this embodiment, reference may be made to relevant content disclosed in the embodiments involved in FIG. 1 to FIG. 6, and details are not described herein again.

The charging apparatus in the embodiment of the present invention converts a service volume into service volumes of multiple segments according to a charging policy, and sends a service volume of each segment to the ABM so that the ABM may perform fee accounting according to the service volume of each segment. The ABM performs fee accounting on service volumes of multiple segments at one time, thereby reducing message interaction between an OCS and the ABM, alleviating a workload of the OCS in multiple times of rating, and improving charging efficiency.

Persons of ordinary skill in the art can understand that all or part of the steps in the foregoing method embodiments of the present invention may be implemented by a program instructing relevant hardware. The program may be stored in a computer readable storage medium. When the program runs, the steps in the foregoing method embodiments are executed. The storage medium includes various media capable of storing program codes, such as a ROM, a RAM, a magnetic disk, or an optical disk.

Finally, it should be noted that the foregoing embodiments are merely provided for describing the technical solutions of the present invention, but not intended to limit the present invention. Although the present invention are described in detail with reference to the embodiments, persons of ordinary skill in the art should understand that modifications still can be made to the technical solutions recorded in each of the foregoing embodiments, or equivalent replacements still can be made to some technical features in the technical solutions; and such modifications or replacements do not cause the essence of corresponding technical solutions to depart from the spirit and scope of the technical solutions in each of the embodiments of the present invention.

## Claims

1. A method for prepaid charging, comprising:
receiving a credit control request sent by a service control center, wherein the credit control request comprises a service volume and a user identifier;
acquiring a charging policy;
converting the service volume into service volumes of more than two segments according to the charging policy; and
sending, to an account balance manager, a credit control request that carries the user identifier and the service volumes of the more than two segments.

2. The method according to claim 1, wherein the service volume comprises a service volume reserved by application, or a used service volume.

3. The method according to claim 2, wherein a service volume of a segment comprises a payment service volume of the segment, a payment amount of the segment, and a minimum payment unit of the segment.

4. The method according to claim 3, wherein the payment service volume of the segment comprises one of the following: payment time of the segment, a payment traffic volume of the segment, a total traffic volume in payment of the segment, a total received traffic volume in the payment of the segment, a total sent traffic volume in the payment of the segment, or a special service unit in payment of the segment.

5. The method according to claim 3, wherein the charging policy comprises linear rates of multiple segments;
the converting the service volume into service volumes of more than two segments according to the charging policy comprises:
separately according to a linear rate of each segment, converting a partial service volume, which complies with the linear rate of each segment, into a service volume of one segment, wherein a ratio of a payment amount of the segment to a payment service volume of the segment for the service volume of each segment is the same as the linear rate of each segment.

6. A method for prepaid charging, comprising:
receiving a credit control request sent by a charging apparatus, wherein the credit control request comprises a user identifier and service volumes of more than one segment;
according to the user identifier, acquiring a user account book corresponding to the user identifier;
separately performing fee accounting on a service volume of each segment according to the user account book and the service volumes of the more than two segments; and
sending a credit control answer to the charging apparatus, wherein the credit control answer comprises a service volume that has undergone accounting.

7. The method according to claim 6, wherein the service volume comprises a service volume reserved by application, and the separately performing fee accounting on the service volume of each segment according to the user account book and the service volumes of the more than two segments comprises: according to user account book and service volumes of more than two segments reserved by application, separately reserving a fee for a service volume of each segment reserved by application; or,
the service volume comprises a used service volume, and the separately performing fee accounting on the service volume of each segment according to the user account book and the service volumes of the more than two segments comprises: separately performing fee deduction on a used service volume of each segment according to the user account book and used service volumes of more than two segments.

8. The method according to claim 7, wherein the service volume includes a payment service volume of a segment, a payment amount of the segment, and a minimum payment unit of the segment.

9. The method according to claim 8, wherein the separately performing fee accounting on the service volume of each segment according to the user account book and the service volumes of the more than two segments comprises:
according to the payment service volume of the segment and the payment amount of the segment, separately calculating a rate corresponding to the service volume of each segment; and
according to the user account book, the rate corresponding to the service volume of each segment, and the payment service volume of the segment, separately performing fee accounting on the service volume of each segment.

10. The method according to claim 9, wherein when a residual free resource exist in the user account book, the according to the user account book, the rate corresponding to the service volume of each segment, and the payment service volume of the segment, separately performing fee accounting on the service volume of each segment comprises:
according to the residual free resource in the account book of the user, performing accounting on a service volume corresponding to the residual free resource; and
according to the service volume that has undergone accounting, the rate corresponding to the service volume of each segment, and the payment service volume of the segment, separately performing fee accounting on the service volume of each segment.

11. The method according to claim 8, wherein the separately performing fee accounting on the service volume of each segment according to the user account book and the service volumes of the more than two segments comprises:
determining that a balance in the user account book is less than the minimum payment unit of the segment, and performing accounting to obtain a fee for the service volume of this segment being 0.

12. The method according to claim 8, wherein separately performing fee accounting on the service volume of each segment according to the user account book and the service volumes of the more than two segments comprises:
when the minimum payment unit of the segment is larger than the payment service volume of the segment, performing fee accounting on the service volume of the segment according to the payment amount of the segment.

13. A charging apparatus, comprising:
a first receiving unit, configured to receive a credit control request sent by a service control center, wherein the credit control request comprises a service volume and a user identifier;
a charging policy acquiring unit, configured to acquire a corresponding charging policy;
a converting unit, configured to convert the service volume into service volumes of more than two segments according to the charging policy; and
a credit control request sending unit, configured to send, to an account balance manager, a credit control request that carries the user identifier and the service volumes of the more than two segments.

14. An account balance manager, comprising:
a second receiving unit, configured to receive a credit control request sent by a charging apparatus, wherein the credit control request comprises a user identifier and service volumes of more than two segments;
a user account book acquiring unit, configured to acquire, according to the user identifier, a user account book corresponding to the user identifier;
an accounting unit, configured to separately perform fee accounting on a service volume of each segment according to the user account book and the service volumes of the more than two segments; and
a credit control answer sending unit, configured to send a credit control answer to the charging apparatus, wherein the credit control answer comprises a service volume that has undergone accounting.

15. The account balance manager according to claim 14, wherein the accounting unit further comprises a rate calculating subunit and an accounting subunit, wherein
the rate calculating subunit is configured to calculate a rate corresponding to a service volume of each segment, according to a payment service volume of the segment and a payment amount of the segment; and
the accounting subunit is configured to separately perform fee accounting on the service volume of each segment according to the user account book, the rate corresponding to the service volume of each segment, and the payment service volume of the segment.

16. The account balance manager according to claim 15, wherein the accounting unit further comprises a free resource subunit, configured to perform, according to a residual free resource in the user account book, accounting on a service volume corresponding to the residual free resource; and
the accounting subunit is specifically configured to separately perform fee accounting on the service volume of each segment according to the service volume that has undergone accounting by the free resource subunit, the rate corresponding to the service volume of each segment, and the payment service volume of the segment.

17. The account balance manager according to claim 14, wherein the accounting unit is further configured to perform fee accounting on a service volume of a segment according to a payment amount of the segment when a minimum payment unit of the segment is larger than a payment service volume of the segment.

18. A system for prepaid charging, comprising:
a charging apparatus, configured to: receive a credit control request sent by a service control center, wherein the credit control request comprises a service volume and a user identifier; acquire a corresponding charging policy; convert the service volume into service volumes of more than two segments according to the charging policy; and send, to an account balance manager, a credit control request that carries the user identifier and the service volumes of the more than two segments; and
the account balance manager, configured to: receive the credit control request sent by the charging apparatus, wherein the credit control request comprises the user identifier and the service volumes of the more than two segments; acquire, according to the user identifier, a user account book corresponding to the user identifier; perform fee accounting on a service volume of each segment according to the user account book and the service volumes of the more than two segments; and send a credit control answer to the charging apparatus, wherein the credit control answer comprises a service volume that has undergone accounting.
